# EUROPEAN PATENT APPLICATION

(11) **EP 1 574 449 A1**
(43) Date of publication of application: **14.09.2005**
(21) Application number: 04388017.8
(22) Date of filing: 09.03.2004
(51) Int. Cl.: B65D 43/16, B65D 77/20, F16C 11/00

(54) **A packaging**

(71) Applicant: Arla Foods amba, 8260 Viby J (DK)
(72) Inventor: Vestergaard, Ulrik, 8900 Randers (DK); Hilstrom, René, 8382 Hinnerup (DK)
(74) Representative: Sundien, Thomas

(57) **Abstract**

A set of receptacles for forming a packaging for eatable products comprises a first receptacle (20) of a plastics material, and a second receptacle (50) of a plastics material. A bottom wall and a peripheral wall of each receptacle define a cavity for holding a product. A male part (83) of a hinge (80) is located at the rim of the first receptacle (20) and a female part (82) of a hinge (80) is located at the rim of the second receptacle (50). The male part (83) of the hinge (80) is integrally formed with said first receptacle (20) and includes a barb-like portion (85) and a stem portion (90), said stem portion (90) connecting said barb-like portion (85) to said rim. The female part of the hinge (80) is a through-going aperture (82) formed at the rim of the second receptacle (50) and designed to receive and to fixate said barb-like portion (85) of said male part (83) with respect to said second receptacle (50).

## Description

The present invention relates to a packaging, a set of receptacles for making a packaging, and a method of assembling two receptacles to make a packaging.

US patent no. 4 226 358 discloses an eatable product packaging comprising two individual receptacles joined by a common closing sheet that defines a hinge about which one of the receptacles may be turned to a position overlying the other. Removal by the end user of the part of the closing sheet covering one of the receptacles may cause the two receptacles to come apart. An additional problem with this packaging is that - since the receptacles remain open until the closing sheet is put in place - each receptacle needs to be filled at a respective filling station located near the assembly station where the two receptacles are joined by the closing sheet, to avoid deterioration of the eatable product in the period from filling to closing.

According to the present invention a common closing sheet forming the hinge may be dispensed with, it being possible to thereby join the receptacles forming the packaging at an assembly station located physically far away from the filling stations, by using a hinge which in accordance with a preferred embodiment of the invention includes a hinge part which undergoes a deformation, permanent or not, upon one of the receptacles being turned to a position overlying the other. By using one receptacle having a male hinge part and the other having a female hinge part the two receptacles already filled with a product and already sealed may be joined in a mechanically operating assembly station where the male hinge part is brought to engage with the female hinge part.

Through the invention the receptacles may be filled with a respective product independently of each other, sealed and be supplied independently of each other to the assembly station where the two receptacles holding a respective product are joined. The invention moreover allows the user to gain access to the product in one of the receptacles without the risk of the joint between the two receptacles being damaged.

According to a preferred embodiment, at the offset the hinge resists movement of the two receptacles in relation to each other, the flexibility of the hinge resulting from one of the hinge parts being subsequently partly plastically deformed when a force is applied after the assembly of the receptacles to turn the receptacles about an axis extending through the hinge. Moreover, in a preferred embodiment wherein the receptacle that covers the other preferably has a smaller height, the hinge part that is partly plastically deformed is designed such that tensile stresses are generated in the hinge part that balance the weight of the receptacle and the contents therein, such that the second receptacle is supported by the hinge in a position corresponding to the receptacle having been turned through 180° away from the rim of the other receptacle.

The invention will now be explained in details with reference to a preferred embodiment shown on the drawing where
Fig. 1a is a perspective view of a packaging according to the invention in an open position,
Fig. 1b is a perspective view of the packaging of fig. 1a with a semi-transparent foil covering each receptacle,
Fig. 2a is a side view of the packaging of fig. 1 a in a closed position,
Fig. 2b is a side view of the packaging of fig. 1a in a fully opened position,
Fig. 3 is a perspective rear view of the packaging of fig. 1 a before assembly,
Fig. 4a is a side view of the packaging of fig. 3,
Figs. 4b and 4c are perspective cross-sectional enlarged views from different angles of the area marked I in fig. 4a,
Fig. 5a is a side view of the packaging of fig. 4a, after assembly,
Fig. 5b is an enlarged side view of the area marked II in fig. 5a,
Fig. 6a is a side view of the packaging of fig. 1 a, and
Figs. 6b and 6c are perspective schematic cross-sectional enlarged views from different angles similar to those of fig. 4b and 4c, showing only the male part of the hinge in a state similar to that shown in figs. 1 a and 6a.

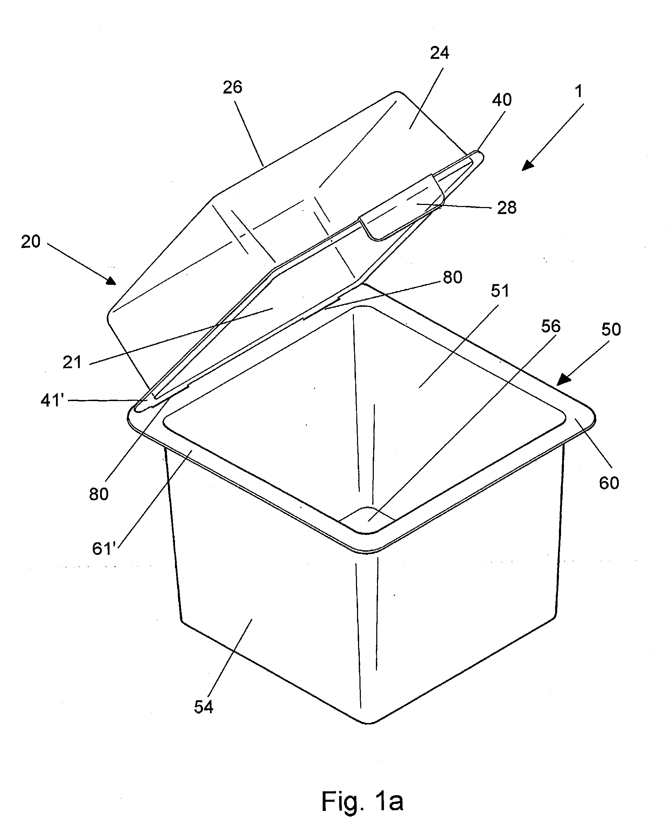

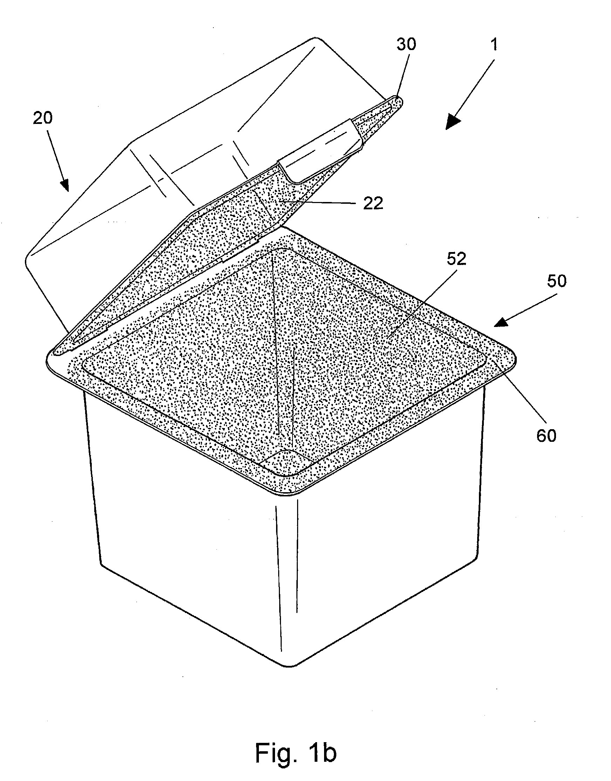

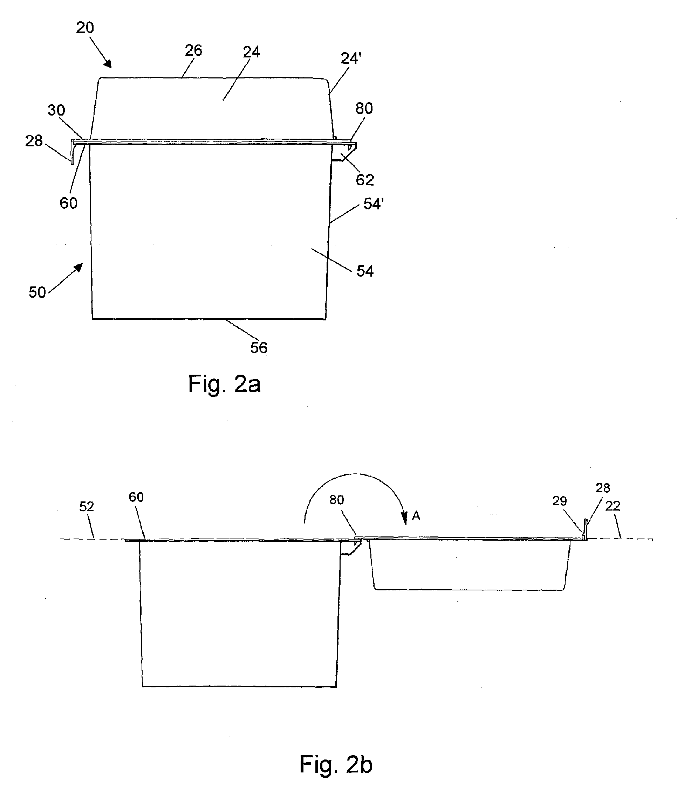

Fig. 1 a shows a plastics material packaging generally designated reference numeral 1 and comprising a first plastics receptacle 20 which is connected to a second plastics receptacle 50 by means of two hinges 80. Each receptacle 20, 50 has a bottom 26, 56 and a peripheral wall 24, 54 that define a cavity 21, 51 for storing a respective product, preferably an eatable product. Preferably, the peripheral wall 24, 54 defines two pairs of opposed parallel sides of the receptacle 20, 50, and a locking tab 28 is arranged opposite the two hinges 80 for holding the two receptacles together in a closed position shown in fig. 2a.

The receptacles are preferably both formed in a injection moulding process, and are preferably both formed from polypropylene or any other material having similar properties. Polypropylene yields a product that is easily deformed plastically.

Opposite the bottom each wall 24, 54 has an outwardly extending flat peripheral flange 40, 60 that defines a rim of the receptacles 20, 50. The flange 60 preferably has the same or about the same thickness as the peripheral wall 54, and likewise the flange 40 preferably has the same or about the same thickness as the peripheral wall 24. The surface 61' of the flange 60 facing away from the cavity 51 defines a plane 52, and the surface 41' of the flange 40 facing away from the cavity 21 defines a plane 22, as shown in fig. 2b. In a first or closed state of the packaging shown in fig. 2a, the aforementioned surfaces 41' and 61' face each other, the flanges 40, 60 resting flatly against each other.

Fig. 1 b shows respective semi-transparent foils 22, 52 covering the cavity 21, 51 of each receptacle 20, 50 and being removably sealed to the flanges 40, 60 to permit access to the product held within the respective receptacle. If required only a single one of the cavities may be covered by a foil. Although no products are visible in the cavities 21, 51 it will be understood that fig. 1b shows the packaging 1 holding two products as it presents itself to the end user after he has disengaged the locking tab 28 from the flange 60 and turned the first receptacle 20 from the position shown in fig. 2a.

In use, the receptacle 50 may by way of example be used for holding yoghurt while the receptacle 20 may be used for holding another product such as muesli to be spread on the yoghurt. The package 1 is purchased by the consumer in the form shown in fig. 2a, a projection 29 (see fig. 2b) on the tab 28 holding the receptacle 20 in this position, and the consumer then turns the receptacle 20 to the position shown in fig. 2b, and removes the foils covering the cavities 21, 51.

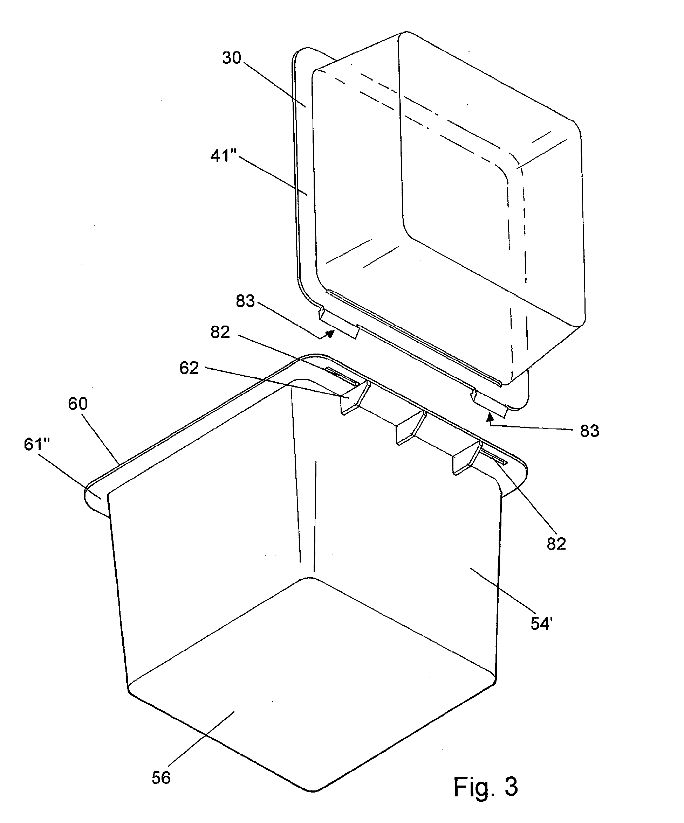

Fig. 3 shows the receptacles 20, 50 prior to assembly at an assembly station. The receptacles will at this time have been filled with a given product at a filling station, and be provided with a respective foil. To allow for the receptacles 20, 50 to be assembled, the hinge 80 according to the invention comprises a male part 83 that is an integral element of the flange 30 of the first receptacle 20, and that may be connected with a female part 82 that is an integral element of the flange 60 of the second receptacle 50. Although the drawing shows the male part 83 as being an element of the upper receptacle 20, the male part 83 may alternatively be an element of the lower, second receptacle 50.

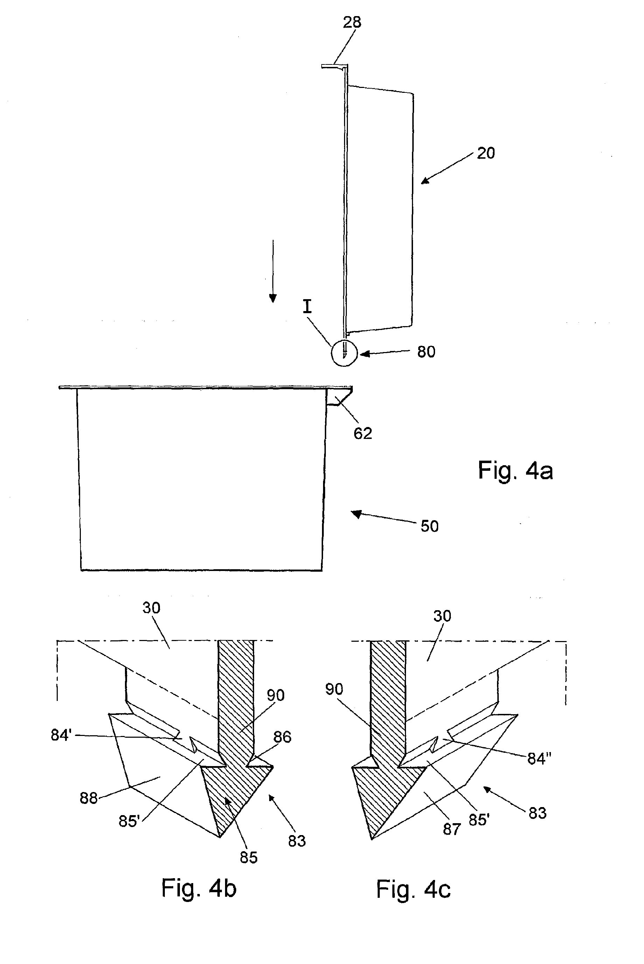

More specifically, the female hinge part 82 is formed as a through-going aperture in the form of an elongated slit extending parallel with the rear side 54' of the receptacle 50 and not covered by the foil 52. In the area of the female hinge part 82 the receptacle 50 has ribs 62 connecting the flange 60 with the rear wall 54' so as to prevent or reduce the deformations of the flange 60 as the male hinge part 83 is connected with the female hinge part 82 through a part of the male hinge part 83 being forced through the aperture 82 when the first receptacle 20 is moved towards the second receptacle 50, as illustrated by the arrow in fig. 4a, using suitable machinery.

The male hinge part 83 is shown in details in figs. 4b and 4c. As shown, the male part 83 is molded as an extension of the flange 30 of the first receptacle 20. It is noted that the male part 83 at the off-set, i.e. when it leaves the mold, is a rigid member. The male part 83 includes a stem portion 90 of essentially the same thickness as the flange 30 and a barb-like portion 85. By the term "barb-like portion" as used herein is meant a portion of the male part 83 that includes a surface projecting laterally with respect to the stem portion 90 so as to provide a means for preventing withdrawal once the male part 83 has been forced into engagement with the female part 82. The transition between the stem portion 90 and the barb-like portion 85 is marked by an area 86 of reduced thickness of the stem portion 90. Frangible ribs 84', 84" are formed on each side of the stem portion 90 within this area 86 of reduced thickness and are connected to the stem portion 90 and to a surface 85' of the barb-like portion 85. The ribs 84', 84" maintain the stability of the male part 83 as the male part 83 is mechanically forced into the aperture 82 during assembly of the packaging 1.

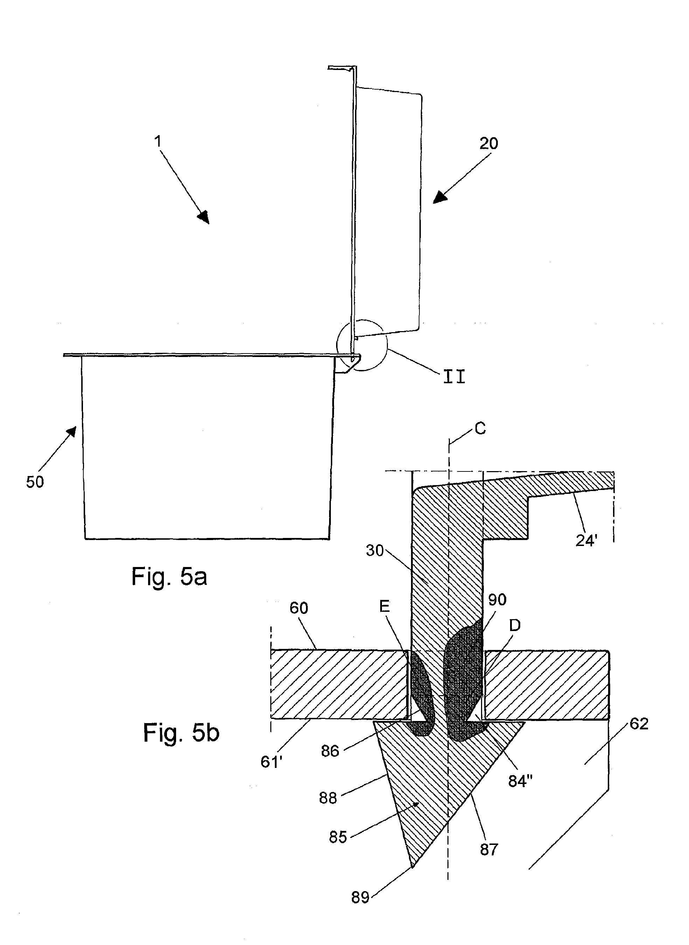

Fig. 5b shows the two receptacles 20, 50 in the assembled state wherein the barb-like portion 85 has been inserted into the through-going aperture 82 forming the female hinge part such that the aforementioned surface 85' of the barb-like portion 85 adjacent the area 86 of reduced thickness lies against the lower surface 61' of the flange 60. In this manner, the barb-like portion 85 is fixated in relation to the second receptacle 50.

Insertion of the barb-like portion 85 into the through-going aperture 82 is possible through the yielding nature of the material making up the receptacle 50 and through a pair of inclined surfaces 87, 88 of the barb-like portion 85 widening, during the insertion, the slit-like aperture 82 which then reassumes its original configuration as the barb-like portion 85 is moved fully through the aperture 82.

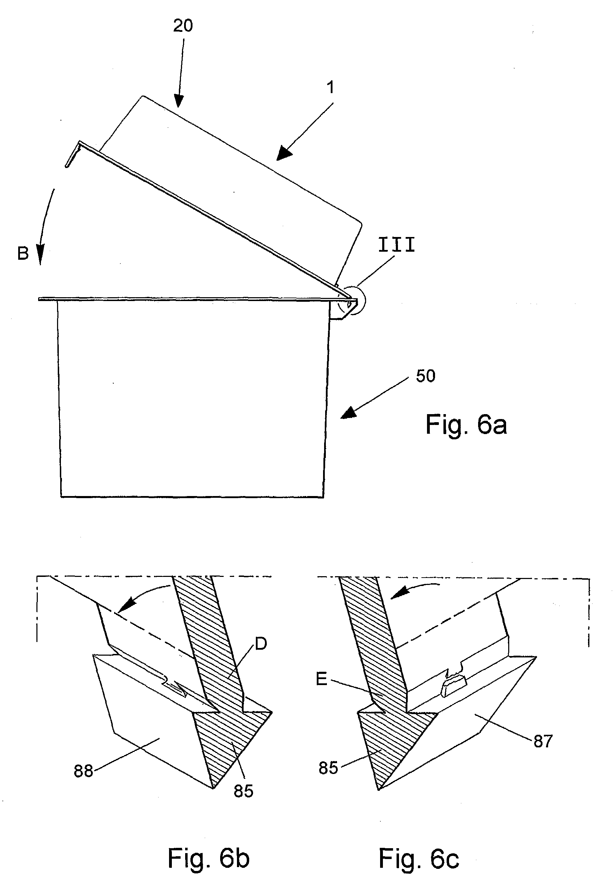

Fig. 6a shows the packaging 1 being closed following the assembly step of fig. 4a, the upper receptacle 20 being turned in direction B. This movement is carried out immediately after the assembly in the sense that the receptacle 20 is only turned in the direction opposite direction B when the user opens the packaging 1 with the aim of obtaining access to the products stored within the receptacles 20, 50. Figs. 6b and 6c show schematically the area identified by numeral III in fig. 6a, the flange 60 not being shown. As shown in fig. 6b and 6c the movement along direction B causes the frangible ribs 84", 84' to be torn and to be heavily compressed, respectively.

Referring again to fig. 5b, the barb-like portion 85 is largely fixed against any rotation, *inter alia* through the ribs 62 that make the flange 60 rigid in the area of the aperture 82. It will be understood that in the preferred embodiment the hinge 80 is not flexible to any significant degree, other than what follows from the aperture 82 possibly being slightly wider than the thickness of the stem 90, when the two receptacles 20, 50 are assembled. The flexibility of the hinge is established through plastic deformation of the male hinge part 83 in two areas E and D as the receptacle 20 is turned along direction B in fig. 6a. The stretching beyond the elastic limit of the material within area D and the compression beyond the elastic limit of the material within area E results from the receptacle 20 being turned into the position of fig. 2a. By forming the stem 90 with an area 86 of reduced thickness the flexibility of the hinge 80 is established at the desired location.

As shown in fig. 5b, in one embodiment of the invention the barb-like portion 85 is not formed symmetrically with respect to a central line C running in a half-plane through the stem 90. The barb-like portion 85 has a triangular cross-section and has a pointed tip 89 which is displaced laterally with respect to the line C as shown in fig. 5b. This geometrical shape, and any similar geometrical shape, results in a smaller tendency of the male hinge part 83 to yield plastically under tension when the upper receptacle 20 is moved towards the position shown in fig. 2b. In this manner, the weight of the receptacle 20, including any contents therein, may be balanced by stresses generated in the stem 90 such that the upper receptacle 20 will be held in the position shown in fig. 2b, whereby the user may simple choose to hold on to the receptacle 50 with the product within the receptacle 20 being readily presented.

Although the embodiment described above makes use of a plastic deformation of the male part of the hinge it is noted that, depending on the material selected for making the first receptacle, the male part may simply undergo an elastic deformation.

## Claims

1. A packaging (1) for eatable products comprising:
a first receptacle (20) of a plastics material, and a second receptacle (50) of a plastics material,
said receptacles (20, 50) each having a bottom wall (26, 56) and a peripheral wall (24, 54) extending from said bottom wall (26, 56) and defining a rim of the receptacle (20, 50) opposite said bottom wall (26, 56),
said bottom wall (26, 56) and said peripheral wall (24, 54) of each receptacle (20, 50) defining a respective cavity (21, 51) for holding a respective eatable product,
a releasable cover (22) covering the cavity (21) of said first receptacle (20) and a releasable cover (52) covering the cavity (51) of said second receptacle (50),
a hinge (80) pivotally joining said receptacles (20, 50) and including a male part (83) located at the rim of said first receptacle (20) and a female part (82) located at the rim of said second receptacle (50),
said hinge (80) allowing a pivotal movement of said first receptacle (20) between a first position wherein the rim of said first receptacle (20) faces the rim of said second receptacle (50) and a second position wherein said first receptacle (20) has been turned with respect to said second receptacle (50),
said male part (83) of said hinge (80) being integrally formed with said first receptacle (20) and including a barb-like portion (85) and a stem portion (90), said stem portion (90) connecting said barb-like portion (85) with said rim,
said female part (82) of said hinge (80) being a through-going aperture formed at the rim of second receptacle (50), said aperture (82) receiving said barb-like portion (85) of said male part (83) and preventing disengagement thereof.

2. A packaging according to the preceding claim, said aperture (82) fixating said barb-like portion (85) of said male part (83) with respect to said second receptacle (50), and said plastics material being such that a part of said male hinge part (83) is plastically deformed when said first receptacle (20) is turned between said second position and said first position.

3. A packaging according to the preceding claim, said first receptacle (20) and said second receptacle (50) being of the same plastics material.

4. A packaging according to any of the preceding claims, said releasable covers being a foil (22, 52) sealed to said rim.

5. A packaging according to any of the preceding claims, said rim of said receptacles (20, 50) including a flange (40, 60) extending outwardly from said wall (24, 54), said male part (83) of said hinge (80) extending from said flange (40) of said first receptacle (20) and said aperture (82) forming said female part of said hinge (80) being formed in said flange (60) of said second receptacle (50).

6. A packaging according to the preceding claim, said flange (40, 60) of each receptacle extending along the entire periphery of the receptacle (20, 50).

7. A packaging according to claim 5 or 6, said flanges (40, 60) abutting each other when said first receptacle (20) is in said first position.

8. A package according to claim 5, 6 or 7, said second receptacle (50) including ribs (62) connecting said flange (60) to said peripheral wall (54') at said female part (82) of said hinge (80).

9. A packaging according to any of the preceding claims, said stem portion (90) of said male part (83) having a reduced thickness where said stem portion (90) is connected to said barb-like portion (85).

10. A packaging according to any of the preceding claims, said male part (83) of said hinge (80) including frangible ribs (84', 84") connecting said stem portion (90) to said barb-like portion (85).

11. A packaging according to any of the receding claims, said hinge (80) allowing a pivotal movement of first receptacle (20) between said first position and a second position wherein said first receptacle (20) has been pivoted by at about 180°, or by 180°, with respect to said second receptacle (50), said stem portion (90) of said male part (83) providing a resistance to further pivotal movement

12. A packaging according to any of the preceding claims, including means (28, 29) for releasably securing said first receptacle (20) in said first position.

13. A packaging according to any of the preceding claims, said male part (83) and said female part (82) of said hinge (80) extending along a length of said peripheral wall.

14. A packaging according to any of the preceding claims, each receptacle (20, 50) having four sides defined by said peripheral wall (24, 54).

15. A packaging according to any of the preceding claims, said first receptacle being made from polypropylene, or a material having similar properties.

16. A set of receptacles for forming a packaging for eatable products, comprising:
a first receptacle (20) of a plastics material, and a second receptacle (50) of a plastics material,
said receptacles each having a bottom wall and a peripheral wall extending from said bottom wall and defining a rim of the receptacle opposite said bottom wall,
said bottom wall and said peripheral wall of each receptacle defining a cavity for holding a product,
a male part (83) of a hinge (80) located at the rim of said first receptacle (20) and a female part (82) of a hinge 880) located at the rim of said second receptacle (50),
said male part (83) of said hinge (80) being integrally formed with said first receptacle (20) and including a barb-like portion (85) and a stem portion (90), said stem portion (90) connecting said barb-like portion (85) to said rim,
said female part of said hinge (80) being a through-going aperture (82) formed at the rim of second receptacle (50) and designed to receive and to fixate said barb-like portion (85) of said male part (83) with respect to said second receptacle (50),
said plastics material being such that at least a part of said stem portion (90) of said male part (83) is plastically deformed when said barb-like (85) portion is turned with respect to said stem portion (90).

17. A packaging according to the preceding claim, said first receptacle (20, 50) and said second receptacle being of the same plastics material.

18. A packaging according to any of the preceding claims 16-17, said first receptacle and said second receptacle each including a foil sealed to said rim and spanning across said peripheral wall (24, 54) to seal said cavity.

19. A packaging according to any of the preceding claims 16-18, said rim of said receptacles including a flange (40, 60) extending outwardly from said wall (24, 54), said male part (83) of said hinge extending from said flange (40) of said first receptacle (20) and said aperture (82) forming said female part of said hinge being formed in said flange (60) of said second receptacle (50).

20. A packaging according to the preceding claim, said flange (40, 60) of each receptacle extending along the entire periphery of the receptacle (20, 50).

21. A packaging according to claim 19 or 20, said flanges (40, 60) abutting each other when said first receptacle (20) is in said first position.

22. A package according to any of claims 16-21, said second receptacle (50) including ribs (62) connecting said flange (60) to said peripheral wall at said female part of said hinge.

23. A packaging according to any of claims16-22, said stem portion (90) of said male part (83) having a reduced thickness where said stem portion (90) is connected to said barb-like portion (85).

24. A packaging according to any of the preceding claims, said male part (85) of said hinge including frangible ribs (84', 84") connecting said stem portion (90) to said barb-like portion (85).

25. A packaging according to any of the receding claims 16-24, said hinge (80) allowing a pivotal movement of first receptacle (20) between said first position and a second position wherein said first receptacle (20) has been pivoted by at about 180°, or by 180°, with respect to said second receptacle (50), said stem portion (90) of said male part (85) providing a resistance to further pivotal movement

26. A packaging according to any of the preceding claims 16-25, including means for releasably securing said first receptacle in said first position.

27. A packaging according to any of the preceding claims 16-26, said first receptacle being made from polypropylene or any material having similar properties.

28. A method of making a food packaging, using the set of receptacles (20, 50) of any of claims 16-27, comprising
filling each receptacle (20, 50) with a food product,
sealing each receptacle (20, 50),
supporting said receptacles (20, 50) with said first receptacle (20 in a position with said barb-like portion (85) facing said aperture (82),
advancing said aperture (82) and said barb-like portion (85) towards each other, and
inserting said barb-like portion (85) into said aperture (82).

29. A method according to the preceding claim wherein said receptacles (20, 50) are sealed using a foil.
